# EUROPÄISCHE PATENTSCHRIFT

(11) **EP 1 622 985 B1**
(45) Veröffentlichungstag und Bekanntmachung des Hinweises auf die Patenterteilung: **06.08.2008**
(21) Anmeldenummer: 04725912.2
(22) Anmeldetag: 06.04.2004
(51) Int. Cl.: C09D 1/02, C08J 7/06

(54) **WASSERLÖSLICHE POLYMERE MIT VERBESSERTEM LÖSEVERHALTEN, DEREN HERSTELLUNG UND VERWENDUNG**
HYDROSOLUBLE POLYMERS EXHIBITING IMPROVED SOLUBILITY CHARACTERISTICS, THE PRODUCTION AND USE THEREOF
POLYMERES HYDROSOLUBLES A MEILLEURE SOLUBILITE, LEUR PRODUCTION ET LEUR UTILISATION

(30) Priorität: 09.04.2003 DE 10316476
(43) Veröffentlichungstag der Anmeldung: 08.02.2006
(73) Patentinhaber: Ashland Licensing and Intellectual Property LLC, Dublin, OH 43017 (US)
(72) Erfinder: STEINER, Norbert, 63755 Alzenau (DE); HERTH, Gregor, 47799 Krefeld (DE); ZIMMERMANN, Klaus, 63517 Rodenbach (DE); JAKOB, Harald, 63594 Hasselroth-Niedermittlau (DE); OVERDICK, Ralf, 65719 Hofheim (DE)
(74) Vertreter: Bülle, Jan
(86) Internationale Anmeldenummer: PCT/EP2004/003610
(87) Internationale Veröffentlichungsnummer: WO 2004/090050

(56) Entgegenhaltungen:
- DE-A- 10 132 513
- DATABASE WPI Section Ch, Week 197706 Derwent Publications Ltd., London, GB; Class A14, AN 1977-10134Y XP002295460 & JP 51 149348 A (NIPPON SYNTHETIC CHEM IND CO) 21. Dezember 1976 (1976-12-21)

## Beschreibung

Die vorliegende Erfindung betrifft synthetische und natürliche wasserlösliche Polymere mit einer Beschichtung aus Wasserglas, deren Herstellung und Verwendung. Aufgrund der Beschichtung weisen die Polymere ein deutlich verbessertes Löseverhalten in Wasser und wäßrigen Lösungen auf.

Wasserlösliche Polymere besitzen häufig ein schlechtes Löseverhalten, insbesondere auch dann, wenn sie ein hohes Molekulargewicht aufweisen. In der Praxis ist damit stets ein zusätzlicher Aufwand bei der Herstellung der Gebrauchslösungen vonnöten. Aufgrund dieser Probleme ist häufig der Einsatz spezieller Lösevorrichtungen erforderlich, wie sie etwa in der DE 44 02 547 beschrieben sind.

Polyacrylamide stellen eine große Gruppe unter den wasserlöslichen Polymeren dar. Acrylamidpolymerisate werden in Form ihrer anionischen, kationischen oder amphoteren Copolymere in vielen Bereichen der Fest-Flüssigtrennung eingesetzt. Neben kommunalen Kläranlagen und der Papierindustrie ist die Bergbauindustrie ein weiterer wichtiger Anwender von Flockungshilfsmitteln.

Das Dispergieren der festen Acrylamidpolymerisate in Wasser ist durch deren Neigung zur Klumpenbildung bzw. zur Bildung von Agglomeraten nach dem Berühren mit Wasser sehr erschwert. Die Klumpen des festen Polymerisats entstehen unmittelbar nach dem Einbringen des Polymerpulvers in das Wasser durch Einkapselung ungelöster Feststoffe in einem äusseren Überzug des wassernassen Polymeren, wobei das Eindringen weiteren Wassers in das Agglomerat verzögert wird.

Beispielsweise müssen bei vielen Bergbauanwendungen große Mengen an Flockungshilfsmitteln unter schwierigen Bedingungen gelöst werden, d.h. niedrigen Wassertemperaturen, die teilweise unter 15 °C liegen und ungenügenden Löseanlagen mit ungenügenden Rührwerken. Oft werden auch Polyacrylamide ohne Rühren in den Lösebehälter gegeben und erst später wird mit dem Rühren begonnen. Das führt dazu, dass sich häufig nicht mehr auflösbare Aggregate bilden. Aus diesen vergelten Agglomeraten resultiert einerseits eine verringerte Wirksamkeit und andererseits eine Verarbeitungsproblem in Form von Verstopfungen in den Löse- und Dosieranlagen.

Im Stand der Technik sind einige Versuche zur Verbesserung des Löseverhaltens von Polyacrylamiden in Wasser beschrieben.

Aus der WO 92/20727 sind beschichtete, wasserlösliche bzw. wasserquellbare Polymerpartikel bekannt. Als Beschichtungsmaterial werden kristalline Substanzen wie etwa Natriumsulfat oder Natriumcarbonat verwendet, wobei bevorzugt in Mischern gesättigte Salzlösungen auf die Polymerpartikel gesprüht werden. Der Anteil an kristallinem Beschichtungsmaterial ist sehr hoch und kann bis zu 55 Gew.% betragen, in den Beispielen sind 10 bis 30 Gew.% ausgewiesen. Die beschichteten Partikel weisen ein verbessertes Dispergiervermögen in wässrigen Lösungen auf, das Auflöseverhalten unter schwierigen Bedingungen ist jedoch nach wie vor unbefriedigend. Ferner stellen die hohen Beschichtungsmittelmengen einen unerwünschten Gewichtsballast dar.

Aus den deutschen Offenlegungsschriften DE 26 07 757 und DE 26 12 101 sind beim Auflösen in Wasser nicht klumpende Acryiamidpolymerisate bekannt, die durch Behandlung der Acrylamidpulver mit bis zu 30 Gew.% Oxysäuren oder Aminosäuren entstehen. Die Behandlung findet in Gegenwart von mit Wasser mischbaren organischen Lösungsmitteln statt.

DE 101 32 513 A1 offenbart teilvernetzte, wasserlösliche Cellüloseether, welche als Pülver oder Granülat vorliegen können, vorzugsweise jedoch als Formkörper vorliegen. Als Züsatzstoff können Wasserlösliche, vorzugsweise pülverförmige Alkalimetallsilikate (Wasserglas) enthalten sein.

Aufgabe der vorliegenden Erfindung war es daher, die Nachteile des Standes der Technik zu überwinden und wasserlösliche Polymere mit möglichst geringen Mengen eines Modifizierungsmittels so zu modifizieren, dass sie auch unter den oben geschilderten schwierigen Bedingungen sicher aufgelöst werden können. Weiterhin ist es eine Aufgabe der Erfindung ein Verfahren zur Modifizierung der wasserlöslichen Polymere zur Verfügung zu stellen, das ohne Anwendung umweltschädlicher organischer Lösemittel durchgeführbar ist und das zu einer im Wesentlichen geschlossenen Oberflächenbeschichtung der Polymerteilchen führt.

Erfindungsgemäß wird diese Aufgabe dadurch gelöst, dass die wasserlöslichen Polymerteilchen mit einer Beschichtung aus Wasserglas versehen werden. Derart beschichtete Polymerteilchen weisen ein hervorragendes Dispergier- und Löseverhalten auf, das insbesondere auch unter erschwerten Auflösebedingungen zum Tragen kommt. Ein Verklumpen der Polymerteilchen in der wässrigen Lösung wird weitgehend unterdrückt.

Es war darüber hinaus völlig überraschend festzustellen, dass bei Verwendung von Wasserglas mit deutlich geringeren Beschichtungsmengen bessere Löseeigenschaften erzielt wurden im Vergleich zu Produkten des Standes der Technik, insbesondere ermöglicht ein steigender Kieselsäureanteil in den Wassergläsern besonders effektive Beschichtungen.

Die Anteil der Beschichtung am beschichteten Polymer kann in weiten Grenzen schwanken und beträgt üblicherweise 0,1 bis 25 Gew. %, bevorzugt 0,5 bis 10 Gew.% und besonders bevorzugt 1 bis 5 Gew.%.

Die erfindungsgemäß einzusetzenden Wassergläser sind Alkalimetallsilikate, die einen glasigen, d.h. amorphen Zustand aufweisen und durch eine molare Zusammensetzung nSiO₂ x Me₂O charakterisiert sind, wobei Me für den entsprechenden Alkalimetallrest steht und die Werte für n bei >1 liegen. Das molekulare Verhältnis von SiO₂ zu Me₂O wird auch als Modul bezeichnet. Erfindungsgemäß werden Wassergläser mit einem Modul M > 1, bevorzugt mit einem Modul M ≥ 2 und besonders bevorzugt M ≥ 3 eingesetzt. Bezüglich der Alkalimetallreste werden üblicherweise Natrium und Kalium, bevorzugt Natrium enthaltende Wassergläser verwendet.

Durch das Coating von wasserlöslichen Polymeren, insbesondere von Homo- und Copolymeren des Polyacrylamids mit Wasserglas bildet sich insbesondere mit einem Wasserglas mit einem Modul ≥ 3 eine glasartig verschmolzene, sehr homogene Coatingschicht aus, die den Polymeren ein hervorragendes Löseverhalten unterschwierigen Bedingungen verleihen.

In einer weiteren Ausführungsform der Erfindung werden die Wassergläser mit mindestens einer weiteren anorganischen und oder organischen wasserlöslichen Verbindungen kombiniert. Als weitere wasserlösliche Verbindungen werden beispielsweise Alkalimetallsalze aus der Reihe Carbonate, Sulfate, Halogenide, Mono-, Di- und Triphosphate, Borate, Phosphonate, Carboxylate, Nitrate, Sulfonate, Acetate, Oxycarbonsäuren, Aminosäuren oder deren Mischungen verwendet. Bevorzugt werden Natriumcarbonat, Natriumsulfat, Trinatriumphosphat und Natriummetaborat eingesetzt. Der Anteil der weiteren anorganischen oder organischen wasserlöslichen Verbindung an der beträgt 1 bis 99 Gew.%, , insbesondere 2 bis 70 Gew.% und besonders bevorzugt 5 bis 50 Gew.%.

In einer weiteren Ausführungsform der Erfindung ist die Oberflächenbeschichtung der Polymerteilchen aus mindestens zwei Schichten aufgebaut, wobei die erste Schicht aus diesen weiteren wasserlöslichen anorganischen und /oder organischen Verbindungen besteht. Die zweite, äußere Schicht ist aus Wasserglas oder einer der zuvor genannten Mischungen aus Wasserglas und einer weiteren anorganischen und /oder organischen Verbindung zusammengesetzt.

Zur Optimierung der Fliesseigenschaften der beschichteten Polymerpulver können sogenannte Rieselhilfsmittel bzw. Antiblockingmittel zugesetzt werden, die ein Verblocken der erfindungsgemäßen Polymerpartikel im trockenen Zustand bei Lagerung und Förderung verhindern. Als Hilfsmittel eignen sich organische und anorganische Substanzen wie etwa Bentonite, Zeolithe, Aerosile und Aktivkohlen. Der Anteil dieser Hilfsmittel beträgt 0,1 bis 10 Gew.%, vorzugsweise 0,5 bis 5 Gew.% bezogen auf das Polymerpulver.

Wasserlösliche Polymere im Sinne der Erfindung, sind sowohl synthetischer als auch natürlicher Art.

Von den natürlichen Polymeren seien beispielsweise die wasserlöslichen Polysaccharide aus Cellulose, Stärke, Galaktomannan, Chitosan und Xanthan genannt und insbesondere deren wasserlösliche Derivate. Die Derivatisierung kann durch physikalische Verfahren und/oder chemische Verfahren wie bespielsweise Veretherungs- und Veresterungsreagenzien erfolgen und führt zu neutralen, anionischen, nichtionischen und kationischen Produkten. Als chemische Derivate kommen vor allem die vom Typ Carboxyl, Carboxyalkyl, Hydroxyalkyl und deren Mischungen infrage. Beispielhaft seien die Verbindungen Carboxmethylcellulose, Methylcellulose, Hydroxypropylcellulose, Carboxmethylstärke, oxidierte Stärke, Quellstärke, kationische Stärkeether genannt.

Synthetische wasserlösliche Polymere im Sinne dieser Erfindung bauen sich aus wasserlöslichen, ethylenisch ungesättigten Monomeren durch radikalische Polymerisation auf. Je nach Monomerzusammensetzung können dabei nichtionische, kationische, anionische oder amphotere Polymere gebildet werden.

Polyacrylamide stellen eine bevorzugte Gruppe unter den erfindungsgemäß zu verwendenden sythetischen wasserlöslichen Polymeren dar. Unter einem Polyacrylamid im Sinne dieses Patentes versteht man ein wasserlösliches Homo- oder Copolymer, das als einen Monomerbestandteil Acrylamid enthält.

Als anionische Comonomere für Polyacrylamide kommen beispielsweise in Frage (Meth)acrylsäure, Vinylsulfonsäure, Acrylamidomethylpropansulfonsäure, (Meth)allylsulfonsäure, Maleinsäure, Fumarsäure, Itaconsäure.
Alle aufgeführten Säuren können als freie Säuren, als Salze oder deren Mischung polymerisiert werden. Die Neutralisation der Monomere kann mit Alkalimetallhydroxiden, Erdalkalimetallhydroxiden, Aminen, Aminoalkoholen und oder Ammoniak erfolgen. Daneben ist jede weitere Base einsetzbar, die mit der Säure ein wasserlösliches Salz bildet, auch eine Mischneutralisation mit verschiedenen Basen ist möglich. Bevorzugte anionische Comonomere sind Acrylsäure, Vinylsulfonsäure und Acrylamidomethylpropansulfonsäure und /oder deren Salze.

Als nichtionische Comonomere für die Polyacrylamide kommen völlig oder begrenzt wasserlösliche Monomere in Frage, beispielsweise (Meth)acrylnitril, N,N-Dimethylacrylamid, Vinylpyridin, Vinylacetat, Methacrylamid, hydroxygruppenhaltige Ester polymerisationsfähiger Säuren die Hydroxyethyl- und -propylester der Acrylsäure und Methacrylsäure, weiter aminogruppenhaltige Ester und Amide polymerisationsfähiger Säuren wie etwa die Dialkylaminoester, z.B. Dimethyl- und Diethylaminoester der Acrylsäure und Methacrylsäure, beispielsweise Dimethylaminoethylacrylat oder z.B. die entsprechenden Amide wie etwa Dimethylaminopropylacrylamid. Begrenzt wasserlösliche Monomere werden nur in dem Umfang eingesetzt wie sie die Wasserlöslichkeit des resultierenden Copolymers nicht beeinträchtigen.

Als Comonomere für kationische Polyacrylamide eignen sich beispielsweise kationisierte Ester der (Meth)acrylsäure wie z.B. von Dimethylaminoethyl(meth)acrylat, Diethylaminoethyl(meth)acrylat, Diethylaminopropyl(meth)acrylat, Dimethylaminopropyl(meth)acrylat, Diethylaminopropyl(meth)acrylat, Dimethylaminobutyl(methacrylat), Diethylaminobutyl(meth)acrylat, kationisierte Amide der (Meth)acrylsäure wie z.B. von Dimethylaminoethyl(meth)acrylamid, Diethylaminoethyl(meth)acrylamid, Diethylaminopropyl(meth)acrylamid, Dimethylaminopropyl(meth)acrylamid, Diethylaminopropyl(meth)acrylamid, Dimethylaminobutyl(meth)acrylamid, Diethylaminobutyl(meth)acrylamid, kationisierte N-Alkylmono- und diamide mit Alkylresten von 1 bis 6 C-Atomen, wie z.B. von N-Methyl(meth)acrylamid, N,N-Dimethylacrylamid, N-Ethyl(meth)acrylamid, N-Propyl(meth)acrylamid, tert.-Butyl(meth)acrylamid, kationisierte N-Vinylimidazole sowie substituierte N-Vinylimidazole, wie z.B. von N-Vinyl-2-methylimidazol, N-Vinyl-4-methyJimidazol, N-Vinyl-5-methylimidazol, N-Vinyl-2-ethylimidazol und kationisierte N-Vinylimidazoline, wie z.B. von Vinylimidazolin, N-Vinyl-2-methylimidazolin und N-Vinyl-2-ethylimidazolin.

Die basischen Monomere werden in mit Mineralsäuren oder organischen Säuren neutralisierter oder quaternisierter Form eingesetzt, wobei die Quaternisierung vorzugsweise mit Dimethylsulfat, Diethylsulfat, Methylchlorid, Ethylchlorid oder

Benzylchlorid vorgenommen wird. In einer bevorzugten Ausführungsform werden die mit Methylchlorid oder Benzylchlorid quaternisierten Monomere verwendet.

Bevorzugte Comonomere für kationische Polyacrylamide sind die kationisierten Ester und Amide der (Meth)acrylsäure, jeweils ein quaternisiertes N-Atom enthaltend und insbesondere bevorzugt werden quaternisiertes Dimethylaminopropylacrylamid und quaternisiertes Dimethylaminoethylacrylat verwendet.

Die Polymerisation der zur erfindungsgemäßen Beschichtung einzusetzenden synthetischen wasserlöslichen Polymere erfolgt nach technisch üblichen Methoden, beispielsweise seien die Gelpolymerisation, Suspensionspolymerisation und Emulsionspolymerisation genannt. Bevorzugt sind Produkte aus dem Verfahren der Gelpolymerisation, die z.B. in der DE 35 44 770 beschrieben ist. Die nach diesem Verfahren anfallenden Polymergele werden zerkleinert, getrocknet und zu Polymerpulvern gewünschter Teilchengröße zermahlen.

Darüber hinaus werden aber auch synthetische wasserlösliche Polymerisate, hergestellt nach dem Verfahren der Suspensions- und Emulsionspolymerisation für die erfindungsgemäße Beschichtung vorteilhaft verwendet.

Die Herstellung der erfindungsgemäßen Polymergranulate erfolgt durch Inkontaktbringen der wasserlöslichen Polymerpulver mit der wäßrigen Beschichtungslösung von Wasserglas oder der Mischung aus Wasserglas und einer weiteren anorganischen oder organischen wasserlöslichen Verbindung. Die Teilchengröße der Polymerpulver ist für den Vorgang der Beschichtung unkritisch. Aus anwendungstechnischer Sicht werden je nach Art und Verwendung der wasserlöslichen Polymere Pulver mit unterschiedlicher Teilchengrößenverteilung eingesetzt. Polyacrylamid liegt beispielsweise bevorzugt als granulares Produkt mit 90 Massenprozent < 2.0 mm, besonders bevorzugt < 1.6 mm vor. Für viele Anwendungen werden Feinanteile, insbesondere unter 200 µm aus dem Polymerpulver abgetrennt.

Der Vorgang des Inkontaktbringens von Polymerpulver und Beschichtungslösung wird bei gleichzeitiger Durchmischung in kontinuierlicher oder diskontinuierlicher Weise durchgeführt, wobei die Durchmischung beispielsweise mittels mechanischer Mischeinrichtungen oder etwa mittels einer Wirbelschicht erfolgt. Geeignete mechanische Mischaggregate zum Aufbringen der Beschichtungslösung sind z.B. Patterson-Kelley-Mischer, DRAIS-Turbulenzmischer, Lödigemischer, Ruberg-Mischer, Schneckenmischer, Tellermischer und Wirbelschichtmischer sowie kontinuierlich arbeitende senkrechte Mischer, in denen das Polymerisat-Pulver mittels rotierender Messer in schneller Frequenz gemischt wird (Schugi-Mischer). Bevorzugt wird während des Mischens der Komponenten bereits mit der Entfernung des durch die Beschichtungslösung eingetragenen Wassers begonnen. Dazu haben sich beheizbare Mischer und insbesondere das Wirbelschichtverfahren als geeignet erwiesen.

Die Beschichtungslösung wird für den Mischvorgang mit dem Polymerpulver üblicherweise auf einen Konzentrationsbereich von 1 bis 40 Gew.%, vorzugsweise auf 2 bis 30 Gew.% und besonders bevorzugt 3 bis 10 Gew.% eingestellt. Beschichtungslösungen mit niedrigen Wasserglaskonzentrationen ermöglichen die Herstellung von für den Lösevorgang besonders effektiven Beschichtungen.

Die Zugabe der Beschichtungslösung erfolgt bevorzugt über Sprüheinrichtungen, die im Zusammenwirken mit dem mechanischen Mischvorgang oder der Wirbelschicht eine gleichmäßige Verteilung der Lösung auf die Polymerteilchen ermöglicht.

Nachdem die Beschichtungslösung mit den Polymerteilchen vermischt worden ist, erfolgt die Trocknung, sofern dies nicht bereits während des Mischvorganges geschehen ist. Bei der Trocknung ist darauf zu achten, daß die wasserlöslichen Polymerteilchen thermisch nicht überbelastet und geschädigt werden. Polyacrylamide werden üblicherweise bei Temperaturen im Bereich von 50°C bis 150°C, bevorzugt 80°C bis 120°C getrocknet. Die optimale Zeitdauer der Nacherhitzung kann in Abhängigkeit vom Wassergehalt und dem Trocknertyp mit wenigen Versuchen leicht ermittelt werden. Die thermische Behandlung kann in

üblichen Trocknern oder Öfen durchgeführt werden; beispielhaft seien Drehrohröfen, Wirbelbetttrockner, Tellertrockner, Paddeltrockner oder Infrarottrockner genannt.

In einem bevorzugten Verfahren zur Herstellung der erfindungsgemäßen Polymere erfolgt die Beschichtung mit dem Beschichtungsmittel in der Wirbelschicht. Dies kann diskontinuierlich und kontinuierlich erfolgen.

Das Polymerpulver wird dabei in einer Wirbelschicht, d.h. in einem aufwärtsgerichteten, heißen Luft- oder Inertgasstrom in der Schwebe gehalten. In diesem Zustand sind die Feststoffpartikel voneinander getrennt und so beim Einsprühen der Beschichtungslösung in das Wirbelbett für die Sprühtropfen rundum zugänglich. Ausserdem ist in diesem Zustand der Wärme- und Stoffaustausch zwischen den Feststoffpartikeln und dem Gasstrom intensiv. Wenn nun ein schwebendes Partikel von einem Sprühtropfen getroffen wird, verteilt sich das flüssige Produkt des Sprühtropfens auf der Oberfläche des Polymerteilchens durch Spreitung. Wegen des intensiven Wärme- und Stoffaustausches mit dem umgebenden Gasstrom kommt es zu einer Verfestigung des Flüssigkeitsfilms durch Trocknung. Durch vielfaches Aufsprühen verdichtet sich die wachsende Hüllschicht auf dem Polymerteilchen bis sich eine homogene geschlossene Beschichtung ausgebildet hat.

Die Zulufttemperaturen in der Wirbelschichtapparatur werden so ausgewählt, dass einerseits eine zügige Beschichtung und simultane Trocknung erfolgt und andererseits keine Beeinträchtigung des Eigenschaftsprofils der wasserlöslichen Polymere durch Überhitzung eintritt. Die Zulufttemperatur liegt für gewöhnlich in einem Bereich von 40°C bis 150°C, vorzugsweise bei 60°C bis 110°C und besonders bevorzugt bei 70°C bis 90°C. Bei sehr temperaturempfindlichen wasserlöslichen Polymeren muß gegebenenfalls von diesen Temperaturbedingungen abgewichen werden.

Das erfindungsgemäße Beschichtungsverfahren mit Hilfe der Wirbelschicht bietet gegenüber den anderen Mischverfahren den Vorteil, dass durch die Verwendung von Wasserglas eine wesentlich homogenere Beschichtung der Polymerteilchen bei geringerem Auftrag erreicht wird.

Im Zusammenhang mit dem erfindungsgemäß einzusetzenden Wirbelschichtverfahren wird auf den einschlägigen Stand der Technik hingewiesen, etwa in Ullmanns Encyclpedia of Industrial Chemistry, 5th Edition, Volume B4, Seite 239 - 274,. sowie der Artikel von H. Uhlemann "Kontinuierliche Wirbelschicht-Sprühgranulation" in Chem.-Ing.Tech. 62(1990), Nr.10, S. 822 - 834.

In einer weiteren Ausführungsform des erfindungsgemäßen Verfahrens werden die wasserlöslichen Polymere im suspendierten Zustand beschichtet, beispielsweise in Form der bei der Suspensionspolymerisation der wasserlöslichen Monomere anfallenden Suspensionen in organischem Lösemittel. Man dosiert dabei die Beschichtungslösung in die gerührte Suspension, wodurch eine Verteilung auf die einzelnen Polymerteilchen stattfindet. Gegebenenfalls ist bei diesem Vorgang der Zusatz von Emulgatoren für eine bessere Verteilung der Beschichtungslösung in der Suspension erforderlich. Die Entwässerung der so beschichteten Polymerteilchen geschieht bevorzugt im suspendierten Zustand durch azeotrope Destillation. Anschließend werden die Polymerteilchen durch Filtration abgetrennt und von anhaftendem Lösemittel befreit.

In einer weiteren Ausführungsform der Erfindung werden Emulsionen von wasserlöslichen synthetischen Polymeren, die nach einer Sprühtrocknung oder einer Trocknung in der Wirbelschicht in die Pulverform überführt wurden, eingesetzt und im erfindungsgemäßen Verfahren mit dem erfindungsgemäßen Beschichtungsmittel beschichtet.

In einer weiteren Ausführungsform der Erfindung werden die Polymerteilchen eingesetzt, die bereits mit einer Schicht aus den zuvor genannten weiteren wasserlöslichen anorganischen und oder organischen Verbindungen versehen sind. Mit der anschließend durchgeführten erfindungsgemäßen Wasserglasbeschichtung wird eine besonders homogene Beschichtung der Polymerteilchen erzielt.

Die erfindungsgemäßen beschichteten wasserlöslichen Polymere sind aufgrund ihres hervorragenden Löseverhaltens unter schwierigen Bedingungen in vielen Anwendungsbereichen einsetzbar, u.a. vorteilhaft bei der Wasser- und Abwasserbehandlung, insbesondere als Flockungshilfsmittel in der Bergbau-, Papier- und Klärwerksindustrie einsetzbar. Weiterhin sind die erfindungsgemäßen Polymere auch sehr gut für Anwendungen im Bereich der wasserlöslichen Verdickungs- und Klebemittel geeignet.

### Beispiele

### Löseverhalten

Das Löseverhalten unter schwierigen Bedingungen wurde wie folgt bestimmt: In einem 1 L Glasgefäß wurde ein Liter kaltes Leitungswasser (10 bis 15°C) vorgelegt. Ohne zu Rühren wurden 1,0 g des entsprechenden Polyacrylamidpulvers in das Lösewasser gegeben. Nach drei Minuten wurde mit einem Fingerrührer aufgerührt (300 Upm) und das Verhalten des Produktes beobachtet.

Es wird wie folgt bewertet:
schlecht: Es bilden sich sich große vergelte Agglomerate, die sich nicht mehr vom Boden lösen.
mittel: Das Produkt löst sich zwar vom Boden ab, bildet aber vergelte Agglomerate gut: Das Produkt löst sich vom Boden ab und bildet nur vereinzelte Gelagglomerate (max. 5 Aggregate)
sehr gut: Das Produkt zerfällt vollständig in die einzelnen Partikel und bildet keine Gelagglomerate

### Beispiel 1

Beschichtung eines anionischen Polyacrylamids aus Acrylamid und Acrylsäure (Praestol^{®} 2510 )*

Das Praestol 2510 (Ansatz jeweils 1500g Gesamtmenge incl. Beschichtung) wurde in einem Aeromatic-Laborwirbelschichttrockner Strea 1 bei einer Zulufttemperatur von 100°C auf eine Produkttemperatur von 60°C erwärmt. Nach Erreichen der Produkttemperatur wurde mit dem Sprühen der jeweiligen Lösung in die Wirbelschicht begonnen. Zum Versprühen wurde eine Zweistoffdüse verwandt, die zu versprühenden Lösungen wiesen eine Konzentration von 5 Gew.% auf. Während des Sprühvorganges wurde die Produkttemperatur durch eine entsprechende Sprührate bei 60°C gehalten. Die Beschichtungsdauer betrug bei 10% Beschichtungsmittel 56 Minuten, bei 3% 24 Minuten. Nach beendetem Sprühen wurde die Düse entfernt, die Lufteingangstemperatur auf 85°C reduziert. Bei dieser Einstellung stellte sich für die Nachtrocknung (30 Minuten) eine Produkttemperatur von 75°C ein.

| **Beschichtung** | **Löseverhalten*** |
|---|---|
| 10 Gew. % Natriumsulfat | mittel |
| 10 Gew. % Natriumcarbonat | mittel |
| 10 Gew.% einer Mischung aus 7 Tln Natriumcarbonat und 3 Tln Natriumwasserglas (Modul 2) | gut |
| 3 Gew. % Natriumwasserglas (Modul 2) | sehr gut |
| ohne Coating | schlecht |

| | |
|---|---|
| *: Praestol^{®} 2510 ist ein Flockungshilfsmittel der Degussa AG, Fa. Stockhausen GmbH&Co.KG | |

### Beispiel 2

Beschichtung eines kationischen Polyacrylamids aus Acrylamid und quaterniertem Dimethylaminopropylacrylamid (Praestaret^{®} PK 422)*

Die Versuchsdurchführung erfolgt in Anlehnung an Beispiel 1, wobei die Produkttemperatur während des Sprühvorgangs bei 52 bis 54 °C gehalten wurde. Die Beschichtungsdauer betrug bei 10% Beschichtungsmittel 56 Minuten, bei 3% Beschichtungsmittel 23 Minuten bzw. 30 Minuten. Die zu versprühenden Lösungen wiesen eine Konzentration von 5 Gew.% auf.

| **Beschichtung** | **Löseverhalten *** |
|---|---|
| 10 Gew.%Natriumsulfat, | mittel |
| 10 Gew. % einer Mischung aus 7 Tln Natriumcarbonat und 3 Tln Natriumwasserglas (Modul 2) | gut |
| 3 Gew. % Natriumwasserglas (Modul 2) | sehr gut |
| 3 Gew. % Nafiriumwasserglas (Modul 2), verlängerte Sprühzeit von 30 Min | sehr gut |
| ohne Coating | schlecht |

| | |
|---|---|
| *: Praestaret^{®} PK 422 ist ein Flockungshilfsmittel der Degussa AG, Fa. Stockhausen GmbH&Co.KG | |

## Patentansprüche

1. Beschichtetes wasserlösliches Polymeres, **dadurch gekennzeichnet, dass** die Beschichtung Wasserglas enthält.

2. Beschichtetes wasserlösliches Polymeres nach Anspruch 1, **dadurch gekennzeichnet, dass** das Wasserglas einen Modul SiO₂ zu MeO₂ von M >1, bevorzugt von M ≥ 2 und besonders bevorzugt M ≥ 3 aufweist.

3. Beschichtetes wasserlösliches Polymeres nach Anspruch 1 und 2, **dadurch gekennzeichnet, dass** das Wasserglas ein Natriumwasserglas ist.

4. Beschichtetes wasserlösliches Polymeres nach Anspruch 1 bis 3, **dadurch gekennzeichnet, dass** die Beschichtung 0,1 bis 25 Gew.%, vorzugsweise 0,5 bis 10 Gew.% und besonders bevorzugt 1 bis 5 Gew.% des beschichteten Polymers beträgt.

5. Beschichtetes wasserlösliches Polymeres nach Anspruch 1 bis 4, **dadurch gekennzeichnet, dass** die Beschichtung ein weiteres anorganisches und/oder organisches wasserlösliches Salz enthält.

6. Beschichtetes wasserlösliches Polymeres nach Anspruch 5, **dadurch gekennzeichnet, dass** das weitere anorganische und/oder organische wasserlösliche Salz in einer separaten Schicht unterhalb der äußeren, Wasserglas enthaltenden Schicht angeordnet ist.

7. Beschichtetes wasserlösliches Polymeres nach Anspruch 5 und 6, **dadurch gekennzeichnet, dass** das weitere anorganische oder organische wasserlösliche Salz aus der Gruppe der Alkalimetallsalze der Carbonate, Sulfate, Halogenide, Mono-, Di- und Triphosphate, Borate, Phosphonate, Carboxylate, Nitrate, Sulfonate, Acetate, Oxycarbonsäuren, Aminosäuren ausgewählt ist und sein Anteil an der Beschichtung 1 bis 99 Gew.%, bevorzugt 2 bis 70 Gew.% und besonders bevorzugt 5 bis 50 Gew.% beträgt.

8. Beschichtetes wasserlösliches Polymeres nach Anspruch 1 bis 7, **dadurch gekennzeichnet, dass** es mit einem Antiblockingmittel behandelt ist.

9. Beschichtetes wasserlösliches Polymeres nach Anspruch 1 bis 8, **dadurch gekennzeichnet, dass** das wasserlösliche Polymer ein Homo- oder Copolymerisat von Acrylamid ist.

10. Beschichtetes wasserlösliches Polymeres nach Anspruch 9, **dadurch gekennzeichnet, dass** das Copolymerisat anionisch ist.

11. Beschichtetes wasserlösliches Polymeres nach Anspruch 10, **dadurch gekennzeichnet, dass** es unter Verwendung von Acrylsäure, Vinylsulfonsäure, Acrylamidomethylpropansulfonsäure und/oder deren Salzen hergestellt wurde.

12. Beschichtetes.wasserlösliches Polymeres nach Anspruch 9, **dadurch gekennzeichnet, dass** das Copolymerisat kationisch ist.

13. Beschichtetes wasserlösliches Polymeres nach Anspruch 12, **dadurch gekennzeichnet, dass** es unter Verwendung von kationisierten Estern oder Amiden der (Meth)acrylsäure, jeweils ein quaternisiertes N-Atom enthaltend, bevorzugt quaternisiertes Dimethylaminopropylacrylamid und quaternisiertes Dimethylaminoethylacrylat hergestellt wurde.

14. Beschichtetes wasserlösliches Polymeres nach Anspruch 1 bis 8, **dadurch gekennzeichnet, dass** das wasserlösliche Polymer ein modifiziertes Polysaccharid ist.

15. Verfahren zur Herstellung der Polymere nach Anspruch 1 bis 14, **dadurch gekennzeichnet, dass** das wasserlösliche Polymer unter Durchmischung mit einer wäßrigen Lösung des Beschichtungsmittels beschichtet wird und eine Beschichtung gegebenenfalls mehrfach durchgeführt wird.

16. Verfahren nach Anspruch 15, **dadurch gekennzeichnet, dass** die wäßrige Lösung des Beschichtungsmittels eine Konzentration von 1 bis 40 Gew.%, vorzugsweise 2 bis 30 Gew.% und besonders bevorzugt 3 bis 10 Gew.% aufweist.

17. Verfahren nach Anspruch 15 und 16, **dadurch gekennzeichnet, dass** die Durchmischung bei erhöhter Temperatur durchgeführt und gleichzeitig Wasser verdampft wird.

18. Verfahren nach Anspruch 15 bis 17, **dadurch gekennzeichnet, dass** die Durchmischung in einer Wirbelschicht durchgeführt wird.

19. Verfahren nach Anspruch 15 bis 18, **dadurch gekennzeichnet, dass** die Zulufttemperatur in der Wirbelschicht 40°C bis 150°C, vorzugsweise bei 60°C bis 110°C und besonders bevorzugt bei 70°C bis 90°C beträgt.

20. Verwendung der Polymere nach Anspruch 1 bis 14 zur Wasserbehandlung, insbesondere als Flockungsmittel in Wässern der Papierindustrie, der Bergbauindustrie und der Klärwerksindustrie.

21. Verwendung der Polymere nach Anspruch 1 bis 14 als Verdickungsmittel und Klebemittel.

## Claims

1. Coated water-soluble polymer, **characterised in that** the coating contains water glass.

2. Coated water-soluble polymer according to claim 1, **characterised in that** the water glass has an SiO₂ to MeO₂ modulus of M > 1, preferably of M ≥ 2 and particularly preferably of M ≥ 3.

3. Coated water-soluble polymer according to claims 1 and 2, **characterised in that** the water glass is a sodium water glass.

4. Coated water-soluble polymer according to any one of claims 1 to 3, **characterised in that** the coating amounts to 0.1 to 25 % by weight, preferably 0.5 to 10 % by weight, and particularly preferably 1 to 5 % by weight of the coated polymer.

5. Coated water-soluble polymer according to any one of claims 1 to 4, **characterised in that** the coating contains a further inorganic and/or organic water-soluble salt.

6. Coated water-soluble polymer according to claim 5, **characterised in that** the further inorganic and/or organic water-soluble salt is disposed in a separate layer underneath the outer layer which contains water glass.

7. Coated water-soluble polymer according to claims 5 and 6, **characterised in that** the further inorganic or organic water-soluble salt is selected from the group of alkali metal salts consisting of carbonates, sulphates, halides, monophosphates, diphosphates and triphosphates, borates, phosphonates, carboxylates, nitrates, sulphonates, acetates, hydroxycarboxylic acids and amino acids, and the proportion thereof in the coating amounts to 1 to 99 % by weight, preferably 2 to 70 % by weight and particularly preferably 5 to 50 % by weight.

8. Coated water-soluble polymer according to any one of claims 1 to 7, **characterised in that** it is treated with an anti-blocking agent.

9. Coated water-soluble polymer according to any one of claims 1 to 8, **characterised in that** the water-soluble polymer is a homopolymer or copolymer of acrylamide.

10. Coated water-soluble polymer according to claim 9, **characterised in that** the copolymer is anionic.

11. Coated water-soluble polymer according to claim 10, **characterised in that** it has been produced using acrylic acid, vinylsulphonic acid, acrylamidomethylpropanesulphonic acid and/or salts thereof.

12. Coated water-soluble polymer according to claim 9, **characterised in that** the copolymer is cationic.

13. Coated water-soluble polymer according to claim 12, **characterised in that** it has been produced using cationised esters or amides of (meth)acrylic acid, each containing one quatemised N atom, preferably quatemised dimethylaminopropyl acrylamide and quatemised dimethylaminoethyl acrylate.

14. Coated water-soluble polymer according to claims 1 to 8, **characterised in that** the water-soluble polymer is a modified polysaccharide.

15. Method for producing the polymers according to any one of claims 1 to 14, **characterised in that** the water-soluble polymer is coated while being intermixed with an aqueous solution of the coating agent and coating is optionally performed several times.

16. Method according to claim 15, **characterised in that** the aqueous solution of the coating agent has a concentration of 1 to 40 % by weight, preferably 2 to 30 % by weight and particularly preferably 3 to 10 % by weight.

17. Method according to claims 15 and 16, **characterised in that** the intermixing is carried out at an elevated temperature and water is simultaneously evaporated.

18. Method according to any one of claims 15 to 17, **characterised in that** the intermixing is carried out in a fluidised bed.

19. Method according to any one of claims 15 to 18, **characterised in that** the supply-air temperature in the fluidised bed is 40 °C to 150 °C, preferably 60 °C to 110 °C, and particularly preferably 70 °C to 90 °C.

20. Use of the polymers according to any one of claims 1 to 14 for water treatment, especially as flocculants in watering in the paper industry, mining industry and sewage treatment industry.

21. Use of the polymers according to any one of claims 1 to 14 as thickening agents and adhesives.

## Revendications

1. Polymère hydrosoluble revêtu, **caractérisé en ce que** le revêtement comprend du verre soluble.

2. Polymère hydrosoluble revêtu selon la revendication 1, **caractérisé en ce que** le verre soluble présente un module de SiO₂ à MeO₂ de M > 1, de préférence, de M ≥ 2 et, particulièrement préférablement, de M ≥ 3.

3. Polymère hydrosoluble revêtu selon les revendications 1 et 2, **caractérisé en ce que** le verre soluble est un verre soluble au sodium.

4. Polymère hydrosoluble revêtu selon les revendications 1 à 3, **caractérisé en ce que** le revêtement constitue de 0,1 à 25 % en poids, de préférence, de 0,5 à 10 % en poids et, particulièrement préférablement, de 1 à 5 % en poids, du polymère revêtu.

5. Polymère hydrosoluble revêtu selon les revendications 1 à 4, **caractérisé en ce que** le revêtement comprend un sel hydrosoluble, inorganique et/ou organique supplémentaire.

6. Polymère hydrosoluble revêtu selon la revendication 5, **caractérisé en ce que** le sel hydrosoluble, inorganique et/ou organique supplémentaire est disposé dans une couche séparée en dessous de la couche externe comprenant du verre soluble.

7. Polymère hydrosoluble revêtu selon les revendications 5 et 6, **caractérisé en ce que** le sel hydrosoluble, inorganique ou organique supplémentaire est choisi parmi le groupe des sels de métaux alcalins des carbonates, des sulfates, des halogénures, des mono-, di- et triphosphates, des borates, des phosphonates, des carboxylates, des nitrates, des sulfonates, des acétates, des acides oxycarboxyliques et des acides aminés, et sa proportion dans le revêtement est de 1 à 99 % en poids, de préférence, de 2 à 70 % en poids et, particulièrement préférablement, de 5 à 50 %en poids.

8. Polymère hydrosoluble revêtu selon les revendications 1 à 7, **caractérisé en ce qu'**il est traité avec un agent anti-adhérant.

9. Polymère hydrosoluble revêtu selon les revendications 1 à 8, **caractérisé en ce que** le polymère hydrosoluble est un homopolymère ou un copolymère de l'acrylamide.

10. Polymère hydrosoluble revêtu selon la revendication 9, **caractérisé en ce que** le copolymère est anionique.

11. Polymère hydrosoluble revêtu selon la revendication 10, **caractérisé en ce qu'**il a été préparé en utilisant de l'acide acrylique, de l'acide vinylsulfonique, de l'acide acrylamidométhylpropanesulfonique et/ou leurs sels.

12. Polymère hydrosoluble revêtu selon la revendication 9, **caractérisé en ce que** le copolymère est cationique.

13. Polymère hydrosoluble revêtu selon la revendication 12, **caractérisé en ce qu'**il a été préparé en utilisant des esters ou des amides cationisés de l'acide (méth)acrylique, dans chaque cas, renfermant un atome d'azote quaternisé, de préférence le diméthylaminopropylacrylamide quaternisé et l'acrylate de diméthylaminoéthyle quaternisé.

14. Polymère hydrosoluble revêtu selon les revendications 1 à 8, **caractérisé en ce que** le polymère hydrosoluble est un polysaccharide modifié.

15. Procédé de préparation des polymères selon les revendications 1 à 14, **caractérisé en ce que** le polymère hydrosoluble est revêtu par mélangeage avec une solution aqueuse de l'agent de revêtement, et un revêtement est éventuellement réalisé à plusieurs reprises.

16. Procédé selon la revendication 15, **caractérisé en ce que** la solution aqueuse de l'agent de revêtement présente une concentration de 1 à 40 % en poids, de préférence, de 2 à 30 % en poids et, particulièrement préférablement, de 3 à 10 % en poids.

17. Procédé selon les revendications 15 à 16, **caractérisé en ce que** le mélangeage est réalisé à une température accrue et de l'eau est simultanément évaporée.

18. Procédé selon les revendications 15 à 17, **caractérisé en ce que** le mélangeage est réalisé dans une couche fluidisée.

19. Procédé selon les revendications 15 à 18, **caractérisé en ce que** la température d'air entrant dans la couche fluidisée est de 40 °C à 150 °C, de préférence, de 60 °C à 110 °C et, particulièrement préférablement, de 70 °C à 90 °C.

20. Utilisation des polymères selon les revendications 1 à 14 pour le traitement des eaux, en particulier, en tant qu'agent de floculation dans des eaux de l'industrie du papier, de l'industrie minière et de l'industrie de traitement des eaux usées.

21. Utilisation des polymères selon les revendications 1 à 14 en tant qu'agents épaississants et adhésifs.
